# EUROPEAN PATENT SPECIFICATION

(11) **EP 3 811 447 B1**
(45) Date of publication and mention of the grant of the patent: **20.09.2023**
(21) Application number: 19824836.1
(22) Date of filing: 25.06.2019
(51) Int. Cl.: H01M 8/04007, H01M 8/04089, H01M 8/2432, H01M 8/2457, H01M 8/2475, F28D 21/00, H01M 8/12

(54) **ELECTROCHEMICAL ASSEMBLY INCLUDING HEAT EXCHANGER**
ELEKTROCHEMISCHE ANORDNUNG MIT WÄRMETAUSCHER
ENSEMBLE ÉLECTROCHIMIQUE COMPRENANT UN ÉCHANGEUR DE CHALEUR

(30) Priority: 25.06.2018 US 201862689335 P
(43) Date of publication of application: 28.04.2021
(73) Proprietor: Saint-Gobain Ceramics&Plastics, Inc., Worcester, MA 01615 (US); Fraunhofer-Gesellschaft zur Förderung der angewandten Forschung e.V., 80686 München (DE)
(72) Inventor: FELDMAN, Brian, P., Northborough, MA 01532 (US); PIETRAS, John, D., Sutton, MA 01590 (US); TAKAGI, Yuto, Natick, MA 01760 (US); MEGEL, Stefan, 01277 Dresden (DE); SCHNETTER, Jens, 01156 Dresden (DE); KUSNEZOFF, Mihails, 01309 Dresden (DE)
(74) Representative: Zimmermann & Partner Patentanwälte mbB
(86) International application number: PCT/US2019/039053
(87) International publication number: WO 2020/005987

(56) References cited:
- EP-A1- 3 316 369
- WO-A1-2017/118481
- JP-B2- 6 114 197
- KR-A- 20130 109 339
- KR-A- 20130 135 430
- KR-B1- 100 709 200
- US-A1- 2006 134 476
- US-A1- 2010 167 154
- US-A1- 2016 064 747
- US-A1- 2016 064 760

## Description

### TECHNICAL FIELD

The following is directed to electrochemical assemblies, particularly, to electrochemical assemblies including an electrochemical device and heat exchanger.

### BACKGROUND ART

Solid oxide fuel cells (SOFC) are electrochemical devices that operate at high temperatures (e.g., 600 °C to 1000 °C). A hot box enclosing an SOFC stack can include insulation to maintain the fuel cells at the desired operating temperatures. The heat generated by the fuel cells is used to maintain the temperature within the hot box. However, maintaining a uniform distribution of the temperature throughout the hot zone can be challenging both because the heat may be generated non-uniformly and the incoming flows provide a cooling effect. Thus, in a well-insulated hot box, gas outlet faces can be significantly hotter than gas inlet faces, which can cause undesired thermal gradients in the fuel cell stack leading to non-uniform current distribution, local thermal stresses, and performance degradation. This issue can be magnified with state-of-the-art SOFC stacks formed with only ceramics (referred to as "all-ceramic stack" hereinafter), because components of an all-ceramic stack have relatively low thermal conductivity, e.g., at least 10 times lower, compared to those containing bulk metal components commonly used in fuel cells. Larger thermal gradients can be generated within an all-ceramic stack, which can accelerate performance degradation of the stack.

All-ceramic stacks also have advantages over metal-supported SOFC stacks and stacks having metal interconnects. For instance, all-ceramic stacks can be formed by cosintering a plurality or an entire stack of fuel cells, which can simplify the manufacturing process and reduce associated cost. Additionally, it is possible to obtain a tight match of thermal expansion coefficients (CTEs) between components by carefully selecting suitable materials, which helps to reduce the risk of formation of cracks during firing processes or operations, induced by thermal stress due to mismatched CTEs. Metals often have much higher CTEs compared to ceramic materials used in fuel cell stacks, rendering it difficult to match the CTEs of an adjacent ceramic component to the metal component. Furthermore, at solid oxide fuel cell operation temperatures, metal surfaces tend to oxidize, which can increase the contact resistance between the metal and adjacent ceramic component, resulting in degradation of electrochemical performance of fuel cells. Using surface coatings may help to reduce oxidation of metal surfaces, but it significantly increases the manufacturing cost.

The industry continues to demand fuel cells with improved performance, stability, and efficiency.

US2006/134476 A1, US2010/167154 A1, and US2016/064747 A1 disclose an SOFC system comprising a housing; an SOFC stack enclosed within the housing; a gas outlet chamber within the housing; and a heat exchanger.

### BRIEF DESCRIPTION OF THE DRAWINGS

The present disclosure may be better understood, and its numerous features and advantages made apparent to those skilled in the art by referencing the accompanying drawings.
FIG. 1 includes an illustration of an exemplary electrochemical device according to an embodiment.
FIG. 2 includes an illustration of a sectional view of an electrochemical assembly according to an embodiment.
FIG. 3 includes an illustration of another sectional view of the electrochemical assembly illustrated in FIG. 2.
FIG. 4A includes an illustration of a top-sectional view of an electrochemical assembly according to an embodiment.
FIG. 4B includes an illustration of a top-sectional view of an electrochemical assembly according to another embodiment.
FIG. 4C includes an illustration of a top-sectional view of an electrochemical assembly according to another embodiment.
FIG. 4D includes an illustration of a cross-sectional view of an electrochemical assembly according to another embodiment.
FIG. 4E includes an illustration of another cross-sectional view of an electrochemical assembly according to an embodiment.
FIG. 4F includes an illustration of a cross-sectional view of an electrochemical assembly according to another embodiment.
FIG. 4G includes an illustration of a cross-sectional view of an electrochemical assembly according to still another embodiment.
FIG. 4H includes an illustration of a cross-sectional view of an electrochemical assembly according to yet another embodiment.
FIG. 5 includes an illustration of a top-sectional view of an electrochemical assembly according to another embodiment.
FIG. 6 includes an illustration of a cross-sectional view of an electrochemical assembly according to an embodiment.
FIG. 7 includes an illustration of a top-sectional view of an electrochemical assembly according to another embodiment.
FIG. 8 includes an illustration of a top-sectional view of an electrochemical assembly according to another embodiment.
FIG. 9 includes an illustration of a top-sectional view of an electrochemical assembly according to another embodiment.
FIG. 10 includes an illustration of a heat exchanger according to an embodiment.
FIG. 11 includes an illustration of a heat exchanger according to another embodiment.
FIG. 12 includes an illustration of a heat exchanger according to another embodiment.
FIG. 13A includes an illustration of a perspective view of a heat exchanger according to another embodiment.
FIGs. 13B to 13D include illustrations of different baffle arrangements inside the heat exchanger illustrated in FIG. 13A.
FIG. 14 includes an illustration of a top-sectional view of an electrochemical assembly according to another embodiment.
FIG. 15 includes an illustration of a heat exchanger according to another embodiment.
FIG. 16 includes an illustration of a heat exchanger according to another embodiment.
FIG. 17 includes an illustration of a perspective view of an electrochemical assembly according to another embodiment.

Skilled artisans appreciate that elements in the figures are illustrated for simplicity and clarity and have not necessarily been drawn to scale. For example, the dimensions of some of the elements in the figures can be exaggerated relative to other elements to help improve understanding of embodiments of the invention. The use of the same reference symbols in different drawings indicates similar or identical items.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes", "including", "has", "having," or any other variation thereof, are intended to cover a non-exclusive inclusion. For example, a process, method, article, or apparatus that comprises a list of features is not necessarily limited only to those features but can include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

Unless otherwise defined, all technical and scientific terms used herein have the same meaning as commonly understood by one of ordinary skill in the art to which this invention belongs. The materials, methods, and examples are illustrative only and not intended to be limiting.

Embodiments relate to an electrochemical assembly including an electrochemical device disposed within a housing and a heat exchanger disposed adjacent to a gas outlet surface of the electrochemical device. The electrochemical device can operate at a relatively high temperature, such as between 500 to 1000 °C. The heat exchanger can help to maintain a relative uniform heat distribution within the housing. For instance, the heat exchanger can be configured to transfer radiated heat energy generated by outlet gas of the electrochemical device to an inlet gas such that the temperature of the gas outlet surface can be reduced, and the temperature of the gas inlet surface can be increased by the pre-heated inlet gas, which helps to reduces the temperature difference and thermal stress within the electrochemical assembly. In an embodiment, the heat exchanger can be placed within a gas outlet chamber that is in fluid communication with the gas outlet surface of the electrochemical device. In another instance, the heat exchanger can be at least partially embedded in a wall of the gas outlet chamber. The electrochemical assembly including the heat exchanger is expected to have improved performance over time and service life.

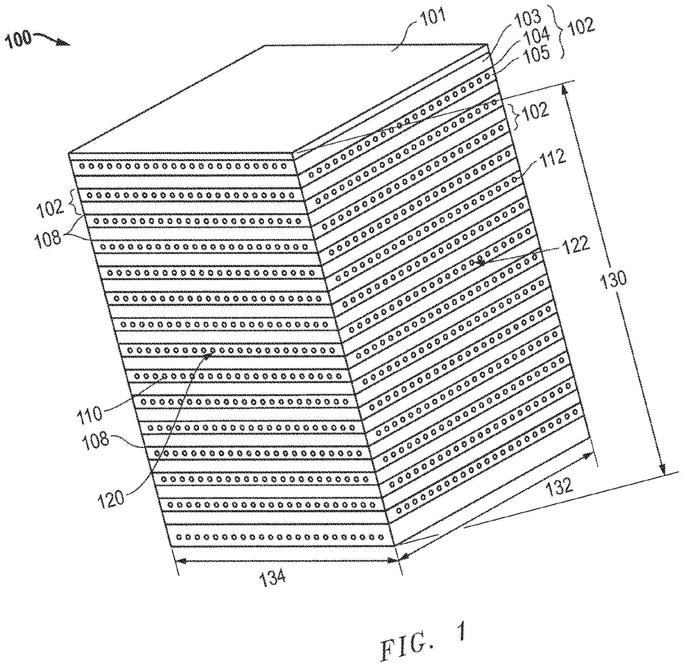

In an embodiment, the electrochemical device can include a fuel cell, such as a solid oxide fuel cell, an electrolyzer, a hydrogen pump, an oxygen pump, a battery, or the like. In a further embodiment, the electrochemical device can include a stack of solid oxide fuel cells, where adjacent solid oxide fuel cells can be separated by an interconnect layer. In another embodiment, a solid oxide fuel cell can include an anode, a cathode, and an electrolyte disposed between the anode and cathode, where each of the anode and cathode can include a porous layer. FIG. 1 includes an illustration of an embodiment of a stack of solid oxide fuel cell 100 including a plurality of planar solid oxide fuel cells 102. Each solid oxide fuel cell 102 can include a cathode 103, an anode 105, and an electrolyte 104. An interconnect 108 is disposed between solid oxide fuel cells 102. In some applications, the stack 100 can include a current collector 101.

Each cathode 103 can include oxygen-containing gas channels having openings 110 and extending between a surface 120 and the opposite surface (not illustrated). A skilled artisan would understand that the other opening of each oxygen-containing gas channel is formed on the opposite surface. Each anode 105 can include fuel gas channels having openings 112 and extending between the opposite surface (not illustrated) and the surface 122. As illustrated, the stack 100 has a cross flow configuration, where fuel gas and oxygen-containing gas channels extend in respective electrode layers in the cross directions.

In an embodiment, the surface 120 of the stack 100 can be an oxygen-containing gas outlet surface, where the outlet gas (e.g., an exhaust gas and water vapor) can flow out of the openings 110 of cathode channels. The opposite surface can be the oxygen-containing gas inlet surface to receive the inlet gas. In another embodiment, the surface 122 can be the fuel gas outlet surface, and exhaust of the fuel gas can exit the openings 112. The surface opposite the surface 122 can be the fuel gas inlet surface to receive the inlet gas.

The solid oxide fuel cells 102 can be formed using suitable materials and methods known in the art. In an embodiment, each of the anode 103, electrolyte 104, cathode 105, and interconnect 108 can include a ceramic compound. In a particular embodiment, the anode 103 can include a cermet material. In another embodiment, the interconnect 108 can be essentially free of a metal material. In still another embodiment, the interconnect 108 can consist of a ceramic material. An exemplary interconnect material can include a lanthanum strontium titanate compound, a lanthanum chromite, platinum, cermets, a non-conducting ceramic material including conducting metal vias, or the like.

In an embodiment, the cathode 103 can be porous, and the surface 122 of the stack 100 can include a coating to help to prevent gas leakage from the cathode 103. In a further embodiment, the coating can include a glass material or a ceramic material. For instance, the coating can include BaO, Al₂O₃, SiO₂, or any combination thereof. In another embodiment, the anode 105 can be porous, and the coating can be applied to the surface 120 to reduce gas leakage.

In an embodiment, the solid oxide fuel cell stack 100 can have a height 130, length 132, and width 134. In an embodiment, the height 130 can be at least 180 mm, such as at least 190 mm, at least 200 mm, or at least 220 mm. In another embodiment, the height 130 can be at most 600 mm or at most 570 mm, or at most 550 mm. Moreover, the height 130 can be within a range including any of the minimum and maximum values noted herein. In another embodiment, the width 134 can be at least 60 mm, at least 70 mm or at least 80 mm. In still another embodiment, the width 134 can be at most 300 mm or at most 280 mm or at most 250 mm. The width can be within a range including any of the minimum and maximum values noted herein. In another embodiment, the length 132 can be same with the width 134. In still another embodiment, the length 132 can be at least 60 mm or at least 70 mm or at least 80 mm. In a further embodiment, the length 132 can be at most 300 mm or at most 280 mm or at most 260 mm or at most 250 mm. It is to be appreciated that the length can be in a range including any of the minimum and maximum value noted herein.

In a further embodiment, the solid oxide fuel cell stack 100 can be configured to operate at a temperature in a range including at least 500 °C and at most 1000 °C. In a particular embodiment, a suitable operation temperature can be at least 650 °C or at least 750 °C or at least 800 °C.

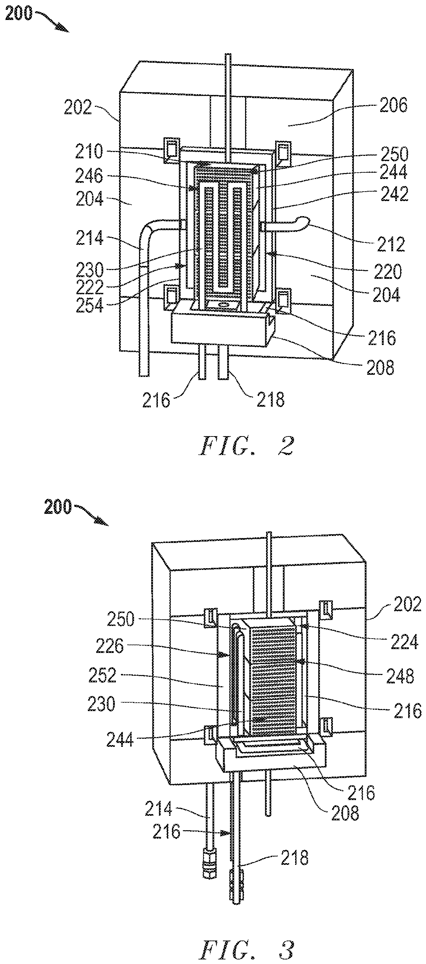

In an embodiment, an electrochemical assembly can include a housing that encloses the electrochemical device. FIG. 2 includes an illustration of a sectional view of an electrochemical assembly 200 including a stack of solid oxide fuel cells 210 disposed within a housing 202. In an embodiment, the stack of solid oxide fuel cells 210 can be similar to the stack 100. The housing 202 can include walls to provide an enclosed environment to help to maintain a desired operation temperature of the stack 210. The walls 204, 206, and 208 can include a refractory material including, for example, a carbide, oxide, boride, nitride, or any combination thereof. A particular exemplary refractory material can include boron carbide, silicon carbide, tungsten carbide, alumina, magnesia, silica, zirconia, chromia, spinel, or any combination thereof. In a further embodiment, any of the walls 204, 206, and 208 can include a thermal insulation material, such as porous alumina oxide, porous silica oxide, or the like, to reduce heat loss.

As illustrated in FIG. 2, the stack 210 can include surfaces 244 and 246 that are in fluid communication with chambers 220 and 222, respectively. Particularly, the chambers 220 and 222 can be open to the surfaces 244 and 246, respectively. In an embodiment, the surface 244 can be a gas inlet surface, and the chamber 220 can be a gas inlet chamber, configured to contain the inlet gas. The tube 212 can be in fluid communication with the surface 244 and chamber 220. In an embodiment, the tube 212 can be a gas inlet tube configured to transport the inlet gas to the chamber 220. In a particular embodiment, the surface 244 can the fuel gas inlet surface, the chamber 220 can be the fuel gas inlet chamber and configured to contain the inlet fuel gas, and the tube 212 can be configured to deliver the inlet fuel gas. In a further embodiment, the tube 212, the wall 242, and the chamber 220 can be part of an inlet manifold.

A tube 214 can be coupled to the chamber 222 such that the tube 214 can be in fluid communication with the chamber 222 and surface 246. In an embodiment, the surface 246 can be similar to the surface 120 of the stack 100. In another embodiment, the surface 246 can be a gas outlet surface for an exhaust to flow out of the stack 210, the chamber 222 can be a gas outlet chamber configured to contain the exhaust, and the tube 214 can be an outlet tube configured to transport the exhaust out of the housing 202. In a particular embodiment, the tube 214 can be the fuel gas outlet tube and configured to transport fuel exhaust, the chamber 222 can be the fuel gas outlet chamber, and the surface 246 can be the fuel gas outlet surface. In another embodiment, the tube 214, the wall 254, and chamber 222 can be part of an outlet manifold.

The stack 210 can include a surface 250 extending between the surfaces 244 and 246. In an embodiment, the surface 250 can be similar to the surface 122 of the stack 100. FIG. 3 includes an illustration of another sectional view of the electrochemical assembly 200, where the front view of the surface 244 is illustrated. The surface 244 can extend between the surface 250 and the surface 248 opposite 250. Chambers 224 and 226 can be in fluid communication with the surfaces 248 and 250, respectively. In an embodiment, the chambers 224 and 226 can be open to the surfaces 248 and 250, respectively. As illustrated in FIG. 3, the tube 216 can be in fluid communication with the surface 248 and chamber 224. In an embodiment, the tube 216 can be a gas inlet tube configured to transport an inlet gas, the surface 248 can be a gas inlet surface that is configured to receive the inlet gas, and the chamber 224 can be configured to contain the inlet gas. In a particular embodiment, the tube 216 can be the oxygen-containing gas inlet tube, configured to transport the oxygen-containing inlet gas, such as air, to the chamber 224 and surface 248. Accordingly, the chamber 224 can be the inlet chamber configured to contain the oxygen-containing inlet gas, and the surface 248 can be the oxygen-containing gas inlet surface. In another embodiment, the tube 216 and chamber 224 can be part of an inlet manifold that is bonded or otherwise secured to the surface 248.

In an embodiment, the inlet manifolds and/or outlet manifolds can include a material that is heat-resistant, oxidation-resistant, and/or corrosion-resistant. In a particular embodiment, any or all the manifolds can include a ceramic material including an oxide, such as aluminum oxide, zirconium oxide, silicon oxide, or a combination thereof, a carbide, such as silicon carbide, a nitride, such as silicon nitride, boron nitride, or a combination thereof, mullite, or the like, or any combination thereof. In another particular embodiment, any or all the manifolds can include substantially a ceramic-based insulation material. The insulation material can include, for example, ceramic fiber (e.g., alumina fiber), refractory ceramic fiber, silica, silicate (e.g., calcium silicate), or any combination thereof. A more particular example can include ZIRCAR^{®} SALI, ZIRCAR^{®} Uniform C2, Calcast^{®} CC500, Silca Silicapan, Silca Silcapor, the like, or any combination thereof. In another particular embodiment, the manifold can include a glass-ceramic material, such as MACOR^{®}. In another embodiment, the manifold can include a metal, such as alumina scale-forming material, an interconnect material, a superalloy, or any combination thereof. An exemplary alumina scale-forming material can include a ferritic alloy, such as an iron chromium-aluminum alloy (e.g., Kanthal APM^{™} and APMT^{™}, Nisshin Steel NCA-1^{™}), a nickel-chromium-aluminum-iron alloy (e.g., Haynes^{®} 214^{®}), or a high-carbon nickel-chromium-iron alloy (e.g., Nicrofer^{®} 6025 HT-Alloy 602 CA). An exemplary interconnect material can include a metallic interconnect material, such as an iron-chromium alloy (e.g., Hitachi^{®} ZMG232G10^{®}, Crofer 22^{®} APU), or a high temperature stainless steel (e.g., Crofer^{®}22H, Sanergy HT 441, E-Brite^{®}). An exemplary superalloy can include a nickel-chromium based superalloy (e.g., Inconel^{®} 600, 601, or 625), a nickel-based steel alloy (e.g., Hastalloy^{®}), a nickel-based superalloy (e.g., Waspaloy^{®}, Rene^{®} 41, or Incoloy^{®}), or any combination thereof.

As illustrated in FIGs. 2 and 3, the tube 218, passing through the wall 208 of the housing 202, can be coupled to the chamber 226 and in fluid communication with the chamber 226 and surface 250. In an embodiment, the tube 218 can be a gas outlet tube configured to transport an outlet gas out of the chamber 226. The surface 250 can be a gas outlet surface where the outlet gas can flow out of the stack 210, and the chamber 226 can be configured to contain the exhaust. In a particular embodiment, the tube 218 can be the oxygen-containing gas outlet tube, the chamber 226 can be the oxygen-containing gas outlet chamber, and the surface 250 can be the oxygen-containing gas outlet surface. In a more particular embodiment, at least a portion of the heat exchanger 230 is aligned with and exposed to gas outlet openings similar to openings 110 at the surface 250.

The electrochemical assembly 200 can include a heat exchanger 230 disposed within the housing 202. As illustrated in FIGs. 2 and 3, the heat exchanger 230 can be disposed within the chamber 226 and spaced apart from the wall 252. The heat exchanger can be in fluid communication with the tube 216. In an embodiment, the chamber 226 is the oxygen-containing gas outlet chamber, and the tube 216 can be configured to transport the oxygen-containing gas to the opposite chamber 224. The heat exchanger 230 can be directly exposed to the outlet gas flown out of the surface 250. In at least one embodiment, the heat exchanger can be in contact with the wall 252 (not illustrated), such as being attached, secured, or embedded to the wall 252.

In an embodiment, the heat exchanger 230 can be coupled or connected to a gas inlet tube 216 such that the inlet gas can flow along a continuous gas passageway and be transported to the inlet surface 248. In an embodiment, the heat exchanger 230 can be configured to transfer heat energy from the outlet gas or the stack 210 to the inlet gas, before the inlet gas is delivered to the gas inlet surface. In a further embodiment, the heat exchanger 230 can be configured to transfer radiated heat energy, particularly from the oxygen-containing gas outlet surface 250, to the inlet gas. The pre-heated inlet gas can be delivered to the inlet surface 248 by the inlet tube 216. The heat exchanger at the gas outlet chamber 226 can help to reduce the temperature differences between the outlet and inlet surfaces 250 and 248.

In an embodiment, the fuel gas can include hydrogen (e.g. pure or humidified), a mixture of 50% of hydrogen and 50% of nitrogen or a humidified mixture thereof, a reformate of a mixture of CH₄, CO₂, CO, H₂, H₂O, or a hydrocarbon. An exemplary composition for a reformate can include 36±10% of H₂, 8±5% of CH₄, 22±5% of CO₂, 5±3% of CO, and 29±10% of H₂O. Another example of the reformate composition can include 54±10 % of H₂, 8±5% of CH₄, 5±3% of CO₂, 11±5% of CO, and 22±10% of H₂O. CH₄ and H₂O can react in the stack by internal steam reforming (CH4 + H2O → CO + 3H2) and absorb part of the heat generated by the stack under electrical power generation.

In a further embodiment, an inlet gas provided to the heat exchanger 230 can have a temperature at least 50 °C less than the temperature of the surface 250 or at least 100 °C or at least 150 °C or at least 200 °C or at least 250 °C or at least 300 °C or at least 350 °C less than the temperature of the surface 250. The pre-heated inlet gas can be transported to the chamber 224 and enter gas channels openings (not illustrated) at the surface 248. Outlet gas generated by electrochemical reactions can exit the gas outlet surface 250 into the chamber 226, where heat from the outlet gas and generated by the stack 210 can be utilized by the heat exchanger 230 to continue to heat inlet gas.

In a well-insulated hot box, without the heat exchanger, heat generated by a solid oxide fuel cell stack can be primarily removed by internal reforming and/or air cooling to maintain stable operation. Heat is primarily transferred by convection in the absence of the heat exchanger, which can be determined by the formula Q'= δT × m × Cp, where Q' represents heat transferred by convection, δT is the temperature difference between the air inlet surface and air outlet surface of the stack, m represents the mass of the fluid (air), and Cp represents the fluid specific heat capacity. In order to maximize stack performance and durability, it is important to maintain uniform temperature distribution in the stack. This means δT has to be kept as small as possible. To reduce δT, the flowrate of air needs to be increased, which in turn reduces the air utilization of the stack. In the absence of the heat exchanger, the air utilization of the stack is typically kept below 20% in order to keep a low thermal gradient and thermal stress in the stack. The use of the heat exchanger 230 can help to reduce δT and allow higher air utilization to be obtained, because the heat exchanger can remove heat from the stack through radiative heat transfer from the stack air-outlet surface. In the presence of the heat exchanger, heat is mainly transferred by radiation and convection, which can be determined by the formula Q"= Qrad+(δT × m × Cp), where Q" represents heat transferred by radiation and convection, and Qrad represents heat transferred by radiation to the heat exchanger. With the addition of Qrad, heat transferred by convection, δT × m × Cp, can be significantly reduced, and air flowrate (m) can be reduced to allow improved air utilization, while a lower δT is maintained. With a lower air flowrate, the blower power consumption can be reduced, which improves the systems overall efficiency. Internal reforming of the fuel can further help to cool the stack in cases where methane and vapor is contained in the fuel flow. In an embodiment, Qrad can be at least 20%, such as at least 30%, at least 40%, at least 50% or at least 60% of the total heat generated by the SOFC stack. Greater Qrad can allow the heat generated by the stack to be effectively recycled to preheat the hot box inlet air, and thus help to reduce heat loss and improve overall hot box thermal efficiency.

The electrochemical assembly disclosed in embodiments can have improved air utilization compared to a similar electrochemical assembly without a heat exchanger. For instance, the air utilization can be at least 25%, such as at least 30%, at least 35%, at least 40%, at least 45%, or at least 50%. The air utilization can be calculated using the formula, Uo=(Aoc/Ap)x100%, wherein Uo is the utilization, Aoc is the amount of oxygen consumed by electrochemical reactions within the electrochemical device, and Ap is the amount of oxygen supplied to the electrochemical device. The electrochemical assembly can operate at a relatively high air utilization, which can also help to reduce power consumption caused by an air blower and improve overall efficiency of the assembly. In a further embodiment, the electrochemical device can have a reduced temperature difference between air outlet surface and air inlet surface. For instance, the temperature difference can be at most 50 °C, at most 30 °C, or at most 20 °C.

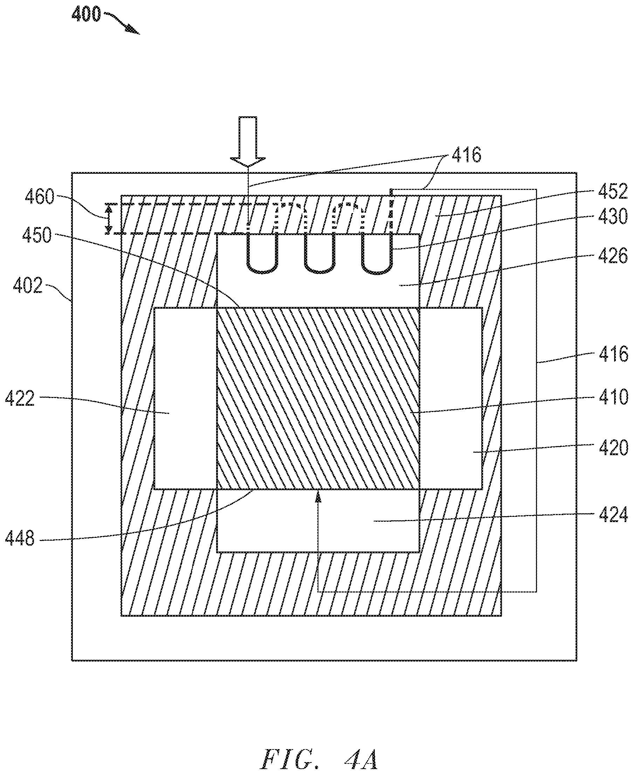

FIG. 4A includes an illustration of a top sectional view of another embodiment of an electrochemical assembly 400. An electrochemical device 410 is positioned within a housing 402. A gas outlet surface 450 of the electrochemical device 410 faces a heat exchanger 430 that is partially embedded in a wall 452 of a gas outlet chamber 426. The gas outlet chamber 426 is open to the surface 450. The heat exchanger 430 is configured to pre-heat an inlet gas and coupled to and in fluid communication with a gas inlet tube 416. As illustrated, the inlet gas can flow into the inlet tube 416 and enter the heat exchanger 430. The pre-heated inlet gas can exit the heat exchanger 430 and continue to flow through the inlet tube 416 to reach the gas inlet chamber 424 and surface 448 of the electrochemical device 410. The electrochemical device can include a stack of solid oxide fuel cells of any embodiment noted in this disclosure. In a particular embodiment, the chamber 424 can be the oxygen-containing gas inlet chamber, and 426 can be the oxygen-containing gas outlet chamber. In at least one embodiment, the chamber 424 can be the fuel gas inlet chamber, and 426 can be the fuel gas outlet chamber. Additional chambers 422 and 420 can be in fluid communication with the other surfaces of the electrochemical device 450. For instance, the chamber 420 can be a gas inlet chamber, and 422 can be a gas outlet chamber.

In another embodiment, the heat exchanger can include a fuel reformer or a vaporizer that is capable of performing an endothermic reaction to facilitate improved utilization of the fuel gas. For example, a reformer can convert a portion of methane (CH₄) fuel and water (H₂O) vapor to hydrogen (H₂) and carbon-monooxide (CO) with a methane steam reforming reaction CH₄ + H₂O → CO + 3H₂. CO and H₂ are more readily usable as a fuel in SOFCs compared to methane. Heavier hydrocarbon fuels, such as C₂H₆, C₃H₈, and the like, can be converted to H₂ and CO in the reformer in a similarly manner. In another embodiment, the heat exchanger can include a catalyst for an endothermic reaction. In a further embodiment, the heat exchanger 430 can be embedded into the wall 452 at a predetermined depth 460. In a further embodiment, the depth 460 can be selected to optimize a fuel gas composition through an endothermic reaction. In a further embodiment, the depth 460 can be selected such that a predetermined temperature of the heat exchanger can be achieved. For instance, in applications where the heat exchanger includes a fuel reformer or a vaporizer, the embedded depth can be selected such that the heat exchanger can have a temperature that facilitates improved performance of the fuel reformer or vaporizer. In applications where a fuel reformer is included in the heat exchanger, the embedded depth can be selected such that the reformer temperature can reach a target temperature, such as the desired equilibrium temperature for achieving the target fuel gas composition (i.e., methane or hydrocarbon conversion). Typically, the target temperature of the reformer can be 400 °C to 700 °C. It is ideal to keep a small amount of methane in the fuel stream after the reformer (methane conversion rate is 30% to 70% in the reformer) so that the stack can be cooled with an adequate amount of endothermic internal reforming. For applications using a vaporizer, the embedded depth can be selected such that the vaporizer temperature can be 20 °C to 100 °C higher than the water boiling point under the stack operation pressure, so that the vaporization process can be well controlled without large pressure fluctuations.

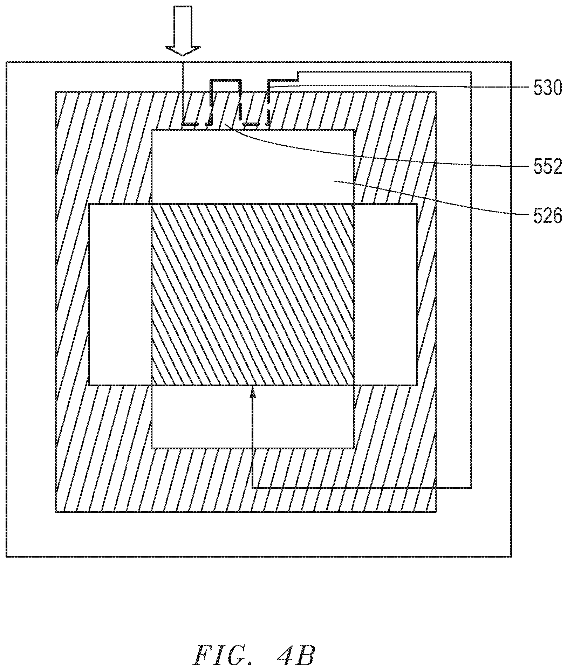

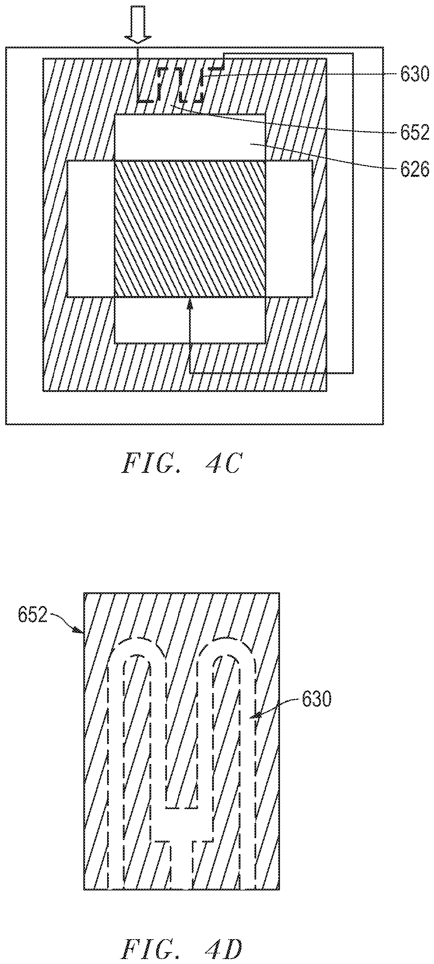

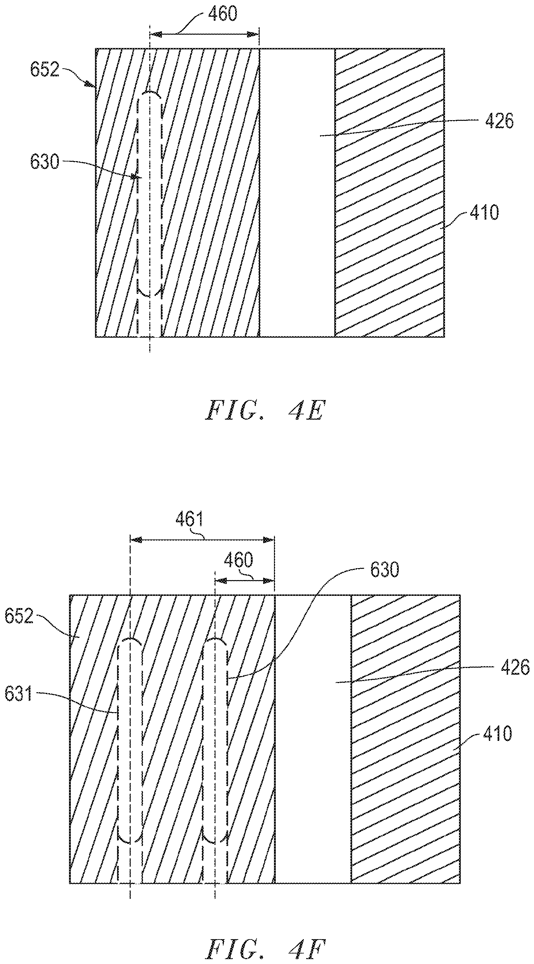

FIG. 4B and FIG. 4C include illustrations of heat exchanges that are embedded in the wall in accordance with embodiments herein. In FIG. 4B, the heat exchanger 530 is partially embedded in the wall 552 with a portion of the heat exchanger disposed out of the gas outlet chamber 526. In FIG. 4C, the heat exchanger 630 is fully embedded within the wall 652 of a gas outlet chamber 626. The wall 652 can be exposed to and face an outlet surface where the outlet gas exits. The heat exchanger 630 can contain reforming catalysts and serve as a prereformer to partially convert hydrocarbon fuel to hydrogen. The heat exchanger 630 can have liquid water as an input and serve as a vaporizer. The embedded depth 460 of the heat exchanger in to the wall can be selected to facilitate optimized performance and stability of the fuel reformer or vaporizer. FIG. 4D includes an illustration of the cross section of the wall 652, in which the heat exchanger 630 is embedded. FIG. 4E includes another illustration of a cross section of the wall 652, in which the heat exchanger 630 is embedded at the depth 460 and is disposed in parallel to the gas outlet surface (e.g., air outlet surface) of the electrochemical device 410, which can facilitate a more uniform temperature distribution in the heat exchanger. When the heat exchanger is a fuel reformer, the configuration as illustrated in FIG. 4E can allow a better control of the reforming temperature for achieving the targeted fuel gas composition, as the reaction equilibrium can be better controlled.

In another embodiment, a plurality of heat exchangers can be embedded in the same wall in a spaced-apart manner to allow the heat exchangers to have differently optimized temperatures. For instance, as illustrated in FIG. 4F, the heat exchanger 631 is disposed further away from the gas outlet chamber 426 compared to the heat exchanger 630. The heat exchanger 631 can include a vaporizer and be embedded at a depth 461 such that it is within a temperature zone of 100 °C to 150 °C, which is optimal for performance of the vaporizer at ambient pressure. The vaporizer temperature can be adjusted according to the water boiling point at the stack operation pressure. The heat exchanger 630 can include a reformer and the depth 460 can be selected such that the heat exchanger 630 can be within a temperature zone of 400 °C to 600 °C, which is suitable for performance of the reformer. The inlet gas and/or water for steam reforming can first pass through the heat exchanger 631 and then enter the heat exchanger 630, where the inlet gas can be further heated to reach a higher temperature.

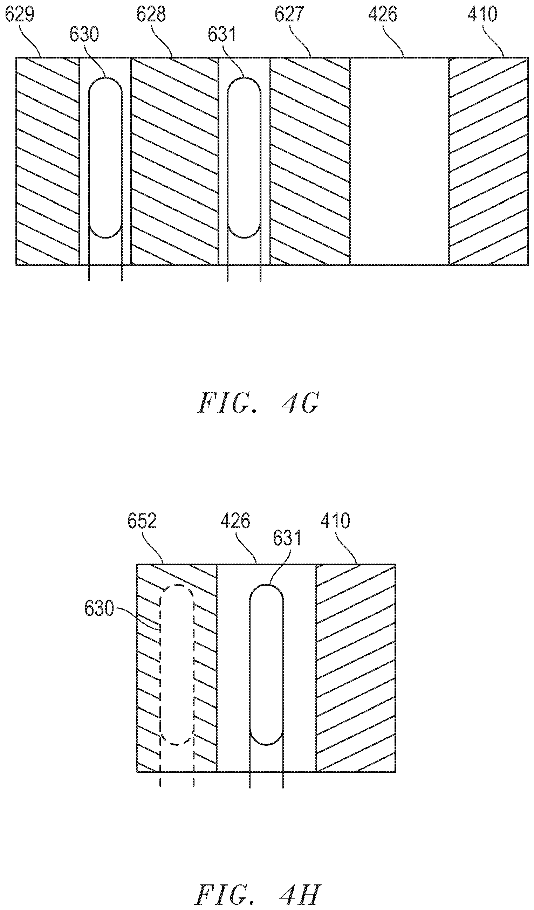

After reading this disclosure, a skilled artisan would understand that various numbers and different placement of the heat exchangers can be used to facilitate improved heat transfer from the electrochemical device to the inlet gas and performance of the electrochemical devices. For instance, FIGs. 4G and 4H include illustrations of cross sections of electrochemical assemblies in accordance with further embodiments. As illustrated, in FIG. 4G, the heat exchanger 630 is separated from the gas outlet chamber 426 by the insulation 627 and from the heat exchanger 631 by insulation 628. A third insulation 629 is disposed outside of the heat exchanger 630 to help to maintain the temperature of the heat exchanger 630. The heat exchanger 630 can have a lower temperature compared to the heat exchanger 631. The inlet gas can be first preheated at the heat exchanger 630 and then enter the heat exchanger 631 to be further heated before being transported to the gas inlet chamber.

In FIG. 4H, the heat exchanger 631 is disposed in the gas outlet chamber 426, and the heat exchanger 630 is embedded in the wall 652. The heat exchanger 630 can have a lower temperature and the inlet gas can enter the heat exchanger 630 first and be preheated there, before the preheated gas enters the heat exchanger 631 to be heated to reach a higher temperature. The placement of the heat exchanger as illustrated in FIG. 4H can allow a room-temperature (20 °C to 25 °C) inlet gas (an oxygen-containing gas or fuel gas) to be directly provided to the hot box without external preheating.

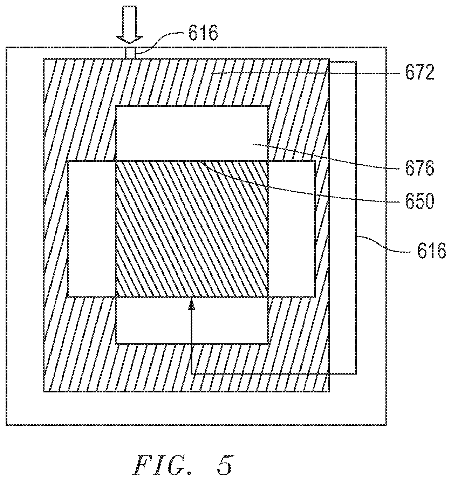

In FIG. 5, the wall 672 of a gas outlet chamber 676 can be hollow or including a cavity such that the inlet tube 616 is in fluid communication with the wall 672. The wall 672 can function as a heat exchanger to heat an inlet gas. The wall 672 can face and be exposed to the gas outlet surface 650 of the electrochemical device. Even though not illustrated, a skilled artisan would understand that additional gas inlet and outlet tubes would be present to transport inlet and outlet fuel and oxygen-containing gases. For instance, the inlet and outlet tubes can be disposed in the similar manner to those of the electrochemical assembly 200.

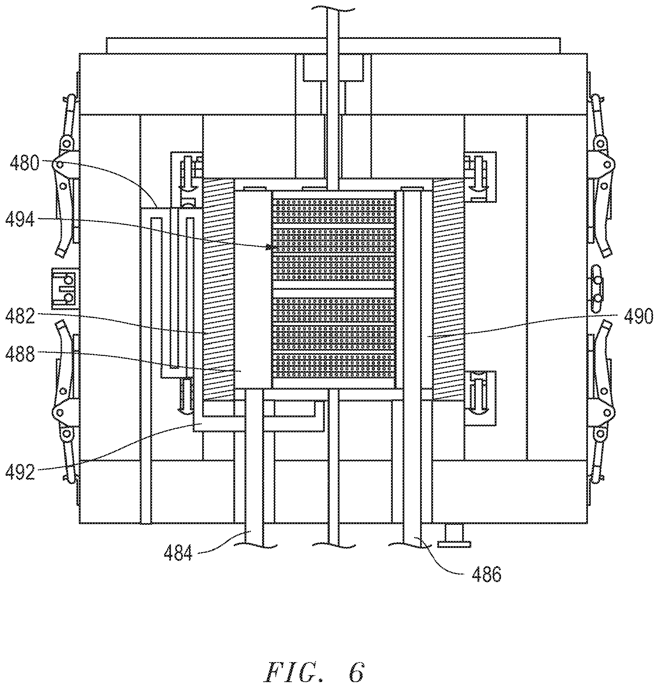

FIG. 6 includes an illustration of a cross-sectional view of an exemplary electrochemical assembly including a heat exchanger 480 in accordance with an embodiment. As illustrated, the heat exchanger 480 can be disposed outside of the insulation wall 482 of the chamber 488, which can be an air outlet chamber coupled to an air outlet tube 484. The heat exchanger 480 can be coupled to a fuel inlet tube 492 to transport the preheated fuel gas to the fuel gas inlet chamber (not illustrated). The air inlet chamber 490 is opposite the air outlet chamber 488 and coupled to the air inlet tube 486. In a particular embodiment, the heat exchanger 480 can include a fuel reformer. The placement of the insulation wall 482 can help to control the temperature of the reformer such that the target temperature can be achieved regardless of the higher operation temperature of the electrochemical device 494. For instance, the reformer temperature can be 500 °C, while the electrochemical device operates at a higher temperature, such as 800 °C.

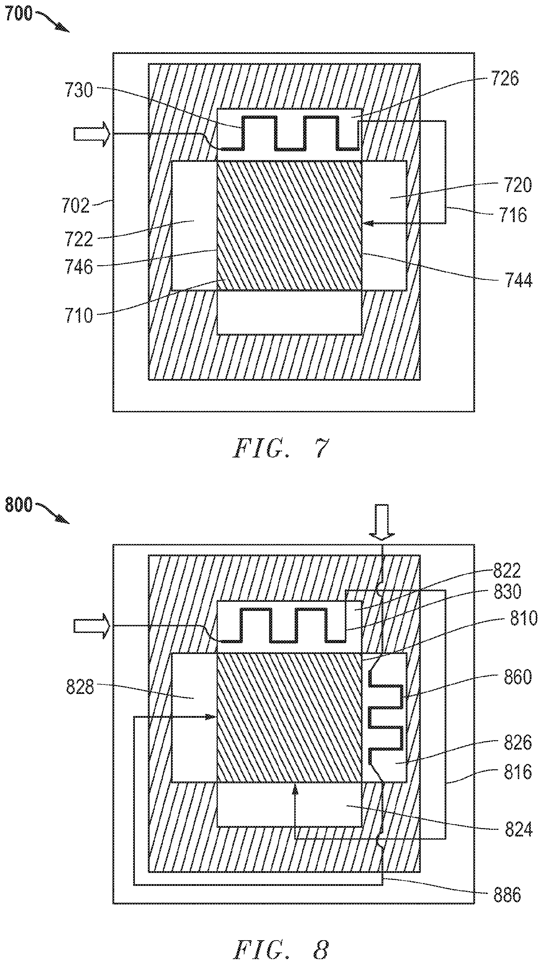

FIG. 7 includes an illustration of a top sectional view of a further embodiment of an electrochemical assembly 700. An electrochemical device 710 is disposed within a housing 702. The electrochemical device 710 can include a stack of solid oxide fuel cells of any embodiment noted in this disclosure. A heat exchanger 730 is disposed within a gas outlet chamber 726 that is adjacent a gas inlet chamber 720. The heat exchanger 730 can be in fluid communication with the gas inlet tube 716 and chamber 720. The pre-heated inlet gas can be transported to the inlet chamber 720 and surface 744, and the outlet gas can exit the outlet surface 746 opposite 744 into the outlet chamber 722. A gas outlet tube (not illustrated) can be in fluid communication with the gas outlet chamber 722 and configured to transport the outlet gas.

In an embodiment, the inlet tube 716 is configured to transport the fuel gas, and the outlet chamber 726 is configured to contain the oxygen-containing outlet gas. In another embodiment, the inlet tube is configured to transport the oxygen-containing gas, and the outlet chamber 726 is configured to contain the fuel outlet gas. In an embodiment, the heat exchanger 730 can be a steam-reformer with endothermic reaction that can utilize the heat collected from the oxygen-containing outlet stream and radiation from the oxygen-containing gas outlet surface of the stack.

In a further embodiment, the electrochemical assembly can include an additional heat exchanger disposed in another gas outlet chamber such that both inlet gases can be pre-heated before being transported to the respective surfaces of the electrochemical device. FIG. 8 includes an illustration of an embodiment of an electrochemical assembly 800 including a heat exchanger 830 disposed within the gas outlet chamber 822 and another 860 in the gas outlet chamber 826 adjacent the chamber 822. The heat exchanger 830 is in fluid communication with the gas inlet tube 816 that is configured to deliver the inlet gas to the inlet chamber 824. The heat exchanger 860 is in fluid communication with another gas inlet tube 886 that is configured to transport the inlet gas to 828. The electrochemical device 810 can include a solid oxide fuel cell stack of any embodiment disclosed herein. In another embodiment, any or both of the heat exchangers 830 and 860 can be at least partially embedded in the respective wall facing the gas outlet surfaces of the electrochemical device.

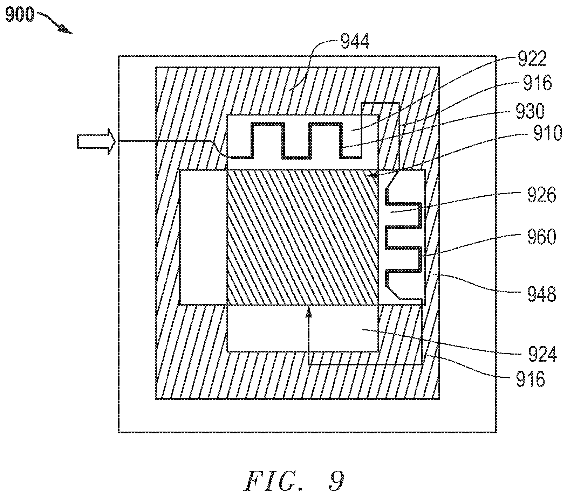

Fig. 9 includes an illustration of a further embodiment of an electrochemical assembly 900. A heat exchanger 930 is disposed in a gas outlet chamber 922, and another heat exchanger 960 is disposed in the adjacent chamber 926. In an embodiment, the chamber 926 can be a gas outlet chamber such that the preheated inlet gas can be further heated in the chamber 926. For instance, the gas outlet chamber 922 can be an oxygen-containing gas outlet chamber, the chamber 926 can be a fuel gas outlet chamber, and the preheated inlet gas can be an oxygen-containing gas that is to be delivered to the gas inlet chamber 924. In another embodiment, the chamber 926 can be a gas inlet chamber for a fuel gas, and the preheated oxygen-containing inlet gas passing through the heat exchanger 960 can help to warm the inlet fuel gas before it is utilized in electrochemical reactions. The heat exchangers 930 and 960 are in fluid communication and coupled by the gas inlet tube 916 that is configured to transport the pre-heated inlet gas to an inlet gas chamber 924 and surface of the electrochemical device 910. In an embodiment, any or both of the heat exchangers 930 and 960 can be at least partially embedded in the respective wall 944 and 948. In an embodiment, heat exchangers 930 and 960 can be a fuel reformer or a vaporizer. In a particular embodiment, the gas inlet tube 916 can be configured to transport the oxygen-containing gas.

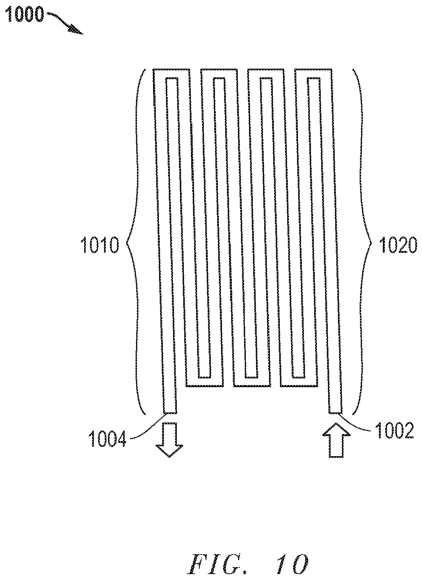

Notably, the heat exchangers described in embodiments herein can have any shape that can facilitate improved heat energy transfer to the inlet gas. For instance, turning to FIG. 10, the heat exchanger 1000 can be a tube having a serpentine shape, an inlet opening 1002, and an outlet opening 1004. In at least one embodiment, the heat exchanger 1000 can have a single gas passage way extending between the openings 1002 and 1004. In another embodiment, the heat exchanger can include a plurality of gas passageways for transporting the same inlet gas.

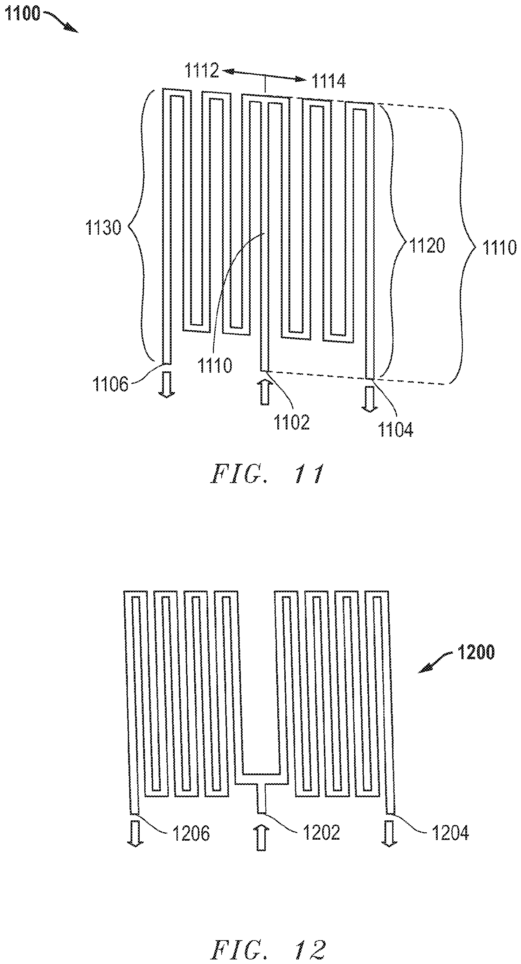

Referring to FIG. 11, the heat exchanger 1100 can include a single inlet opening 1102 and outlet openings 1104 and 1106. The passage way 1110 can split into two passage ways that can extend in opposite directions 1112 and 1114. The inlet gas can enter the opening 1102 and exit the heat exchanger 1100 from openings 1106 and 1104. In this way, pressure loss through the heat exchanger can be reduced by reducing the flow rate, which can help to lower the auxiliary blower power consumption. In an embodiment, the openings 1106 and 1104 can be coupled to gas inlet tubes that are in fluid communication with the same gas inlet chamber.

FIG. 12 includes an illustration of a heat exchanger 1200 according to an embodiment. The heat exchanger 1200 can include a plurality of gas passage ways extending between the same inlet opening 1202 and different outlet openings, 1204 and 1206. This configuration can help to reduce pressure loss by using a common gas passage way that is relatively short and quickly bifurcates as the inlet tube extends into the chamber.

In another embodiment, the heat exchanger can include a gas inlet portion close to the inlet opening, and a gas outlet portion close to the outlet opening, such as the outlet portions 1010, 1110, and 1130, and the inlet portions 1020 and 1120 of the heat exchangers 1000 and 1100. In a further embodiment, the gas inlet portion of the heat exchanger can be aligned with and exposed to gas outlet openings (e.g., 110 and 112) at the gas outlet surface of the electrochemical device. In a more particular embodiment, the inlet portion can be aligned with and exposed to oxygen-containing gas outlet openings such that the outlet gas can directly impinge on the inlet portion of the heat exchanger.

In an embodiment, a gas outlet surface of the electrochemical device can include surface portions having different temperatures. The heat exchanger can be disposed such that a colder portion (i.e., the gas inlet portion) of the heat exchanger is aligned with a hotter surface portion of the gas outlet surface. In particular implementations, the gas inlet portion of the heat exchanger can be aligned with the hottest surface portion, such as the surface portion that has the maximum temperature of the gas outlet surface. In more particular instances, the gas inlet portion of the heat exchanger can be aligned with a surface portion that can be the hottest portion of the entire electrochemical device.

For example, the oxygen-containing gas outlet surface can have a temperature gradient in the lateral direction. In some implementations, the heat exchanger can be disposed such that the gas inlet portion of the heat exchanger is aligned with a hotter surface portion of the oxygen-containing gas outlet surface. In a particular instance, when the SOFC stack (e.g., 100) uses only hydrogen as the fuel gas, the highest temperature of the stack is adjacent to the corner formed by the air outlet surface and the hydrogen inlet surface. In order to reduce the maximum stack temperature, the heat exchanger can be disposed in the air outlet chamber and the inlet portion can be aligned with the area of the air outlet surface that is adjacent the edge of the hydrogen inlet surface. In another particular instance, when using a fuel gas with a greater content of methane, the corner formed by the air outlet surface and fuel gas outlet surface can have the highest temperature, and the heat exchanger can be disposed in the air outlet chamber or the fuel outlet chamber, where the inlet portion of the heat exchanger can be aligned with the surface area adjacent the edge of the fuel gas outlet surface. In another embodiment, the outlet portion of the heat exchanger can be aligned with the hotter surface portion of a gas outlet surface, which can facilitate increased heat transfer from the stack to the heat exchanger. After reading this disclosure, a skilled artisan would understand that the hottest portion of an electrochemical device can be dependent on the fuel, the geometry of the device, the hot box geometry, and operation conditions and be able to determine the hottest portion of a gas outlet surface and alignment of the heat exchanger.

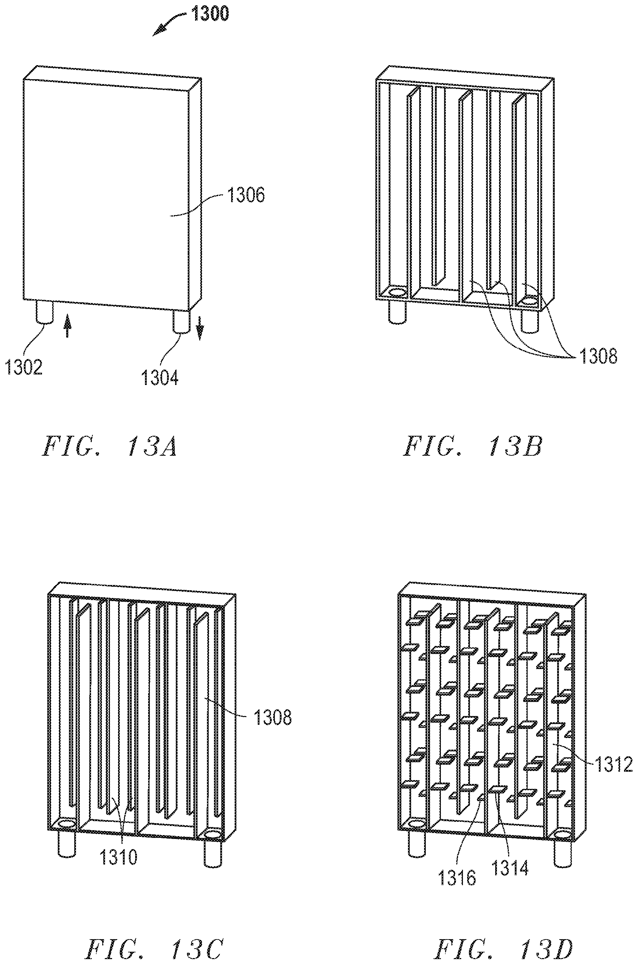

In a further embodiment, the heat exchanger can have a shape of a plate or a box, as illustrated in FIGs. 13A to 13D. FIG. 13A includes a front perspective view of the heat exchanger 1300. FIGs. 13B to 13D include illustrations of various arrangements of baffles 1308 to 1316 in the interior of the heat exchanger 1300. A skilled artisan would understand the arrangements of baffles are not limited to the illustrations included in FIGs. 13B to 13D, and other arrangements can be applied. The inlet gas can enter the heat exchanger 1300 at the inlet opening 1302 and exit the outlet opening 1304. In an embodiment, the heat exchanger 1300 can be disposed in a gas outlet chamber and coupled to a gas inlet tube.

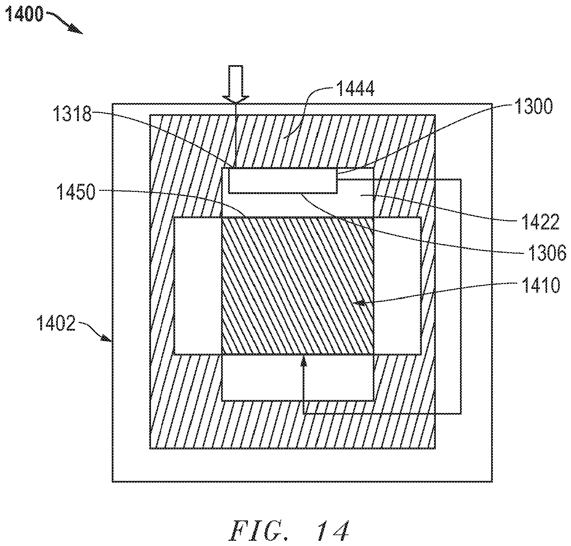

FIG. 14 includes an illustration of a particular embodiment of an electrochemical assembly 1400 including an electrochemical device 1410 within a housing 1402. The heat exchanger 1300 can be placed in the gas outlet chamber 1422 and attached to the wall 1444. A major surface, e.g., 1306, of the heat exchanger 1300 can face a gas outlet surface 1450 of the electrochemical device 1410. The other major surface 1318 can be attached to the wall 1444. In another embodiment, the major surface 1318 can be spaced apart from the wall 1444.

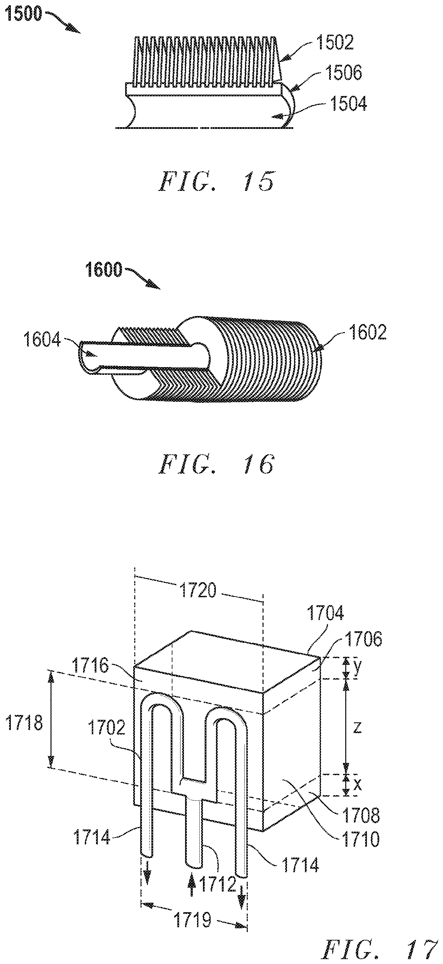

In a further embodiment, the heat exchanger can include a fin, a baffle, or a combination thereof to improve the heat exchange. FIG. 15 includes an illustration of a sectional view of a portion of a heat exchanger 1500 including a gas passage way 1504 and having fins 1502 at the outer wall 1506. FIG. 16 includes an illustration of a sectional view of a portion of another heat exchanger 1600 including a gas passage way 1604 and fins 1602.

In an embodiment, the heat exchanger can be disposed in a gas outlet chamber and parallel to the gas outlet surface of an electrochemical device. The heat exchanger can directly face the gas outlet surface and have a surface area that is directly exposed to the gas outlet surface. In an embodiment, the surface area can be at least 25%, at least 40%, at least 60%, or at least 75% of a total area of the gas outlet surface to facilitate improved heat transfer efficiency.

In another embodiment, the heat exchanger may not extend the full height (e.g., 130, referred to as "H" hereinafter) of an electrochemical device. FIG. 17 includes an illustration of perspective view of a portion of an electrochemical assembly including a heat exchanger 1702 coupled to an inlet tube 1712 and outlet tubes 1714. The heat exchanger 1702 can be directly facing a gas outlet surface 1716 of an electronic device 1704 (e.g., an SOFC stack). The device 1704 can have a top portion 1706 having a height y, a bottom portion 1708 having a height x, and a middle portion 1710 having a height z, wherein x+y+z=H. In a particular embodiment, x+y<0.5H.

The heat exchanger 1704 can have a height 1718 that is substantially the same as the height z of the middle portion 1710. In an embodiment, the height 1718 may be smaller than the height z of the middle portion 1710. In another embodiment, the height 1718 can be greater than z of the middle portion. In another embodiment, at least 60%, at least 80%, or at least 90%, or 100% of the height z is aligned with at least a portion of the height 1718, the majority of the height 1718, or the entire height 1718 of the heat exchanger 1704.

In an embodiment, the heat exchanger can have a length 1719 extending in parallel with the length 1720 of the gas outlet surface 1716. In another embodiment, the length 1719 of the heat exchanger and the length 1720 of the gas outlet surface can be offset, such as forming an acute angle. For example, the offset angle may be not greater than 10°, such as not greater than 8° or not greater than 5°. As illustrated, the length 1720 of the heat exchanger is smaller than the length 1720 of the device 1704. In another embodiment, the length 1719 can be the same as or greater than the length 1720. In a further embodiment, the surface area SA_{HX}, wherein SA_{HX}=1719 ×1718, can be at least 80%, such as at least 90% or at least 95 % or 100% of the surface area SA_{MP}, wherein SA_{MP}=1710×1720.

The top portion 1706 and the bottom portion 1708 can be colder than the middle portion 1710 which can be caused by heat losses by conductive transfer through current collectors or thermal insulation. The placement of the heat exchanger relative to the stack, as illustrated in FIG. 17, can help to improve the temperature distribution along the height of the device 1704, because the alignment of the heat exchanger 1702 with the middle portion 1710 can allow selective cooling of the middle portion 1710. As illustrated, the heat exchanger 1702 is disposed such that the heat exchanger 1702 and the gas outlet surface 1716 are directly face-to-face, and particularly, the majority of the heat radiated from the middle portion 1710 can be received by the heat exchanger 1702.

In an embodiment, the heat exchanger can include a material that can facilitate improved heat transfer efficiency of the heat exchanger. For example, the heat exchanger can include a material having an emissivity of at least 0.90 or at least 0.95 to help improve absorption of radiated heat energy. In another particular embodiment, the heat exchanger can have a black outer surface. In another embodiment, the heat exchanger may be formed with a material having a relatively lower emissivity and coated with another material having the desired emissivity. In another embodiment, the heat exchanger can include a heat-resistant, oxidation-resistant, or a corrosion-resistant material. In a particular embodiment, the heat exchanger can include an alumina scale-forming material, an interconnect material, or any combination thereof. An exemplary alumina scale-forming material can include a ferritic alloy, such as an iron-chromium-aluminum alloy (e.g., Kanthal APM^{™} and APMT^{™}, Nisshin Steel NCA-1^{™}), a nickel-chromium-aluminum-iron alloy (e.g., Haynes^{®} 214^{®}), or a high-carbon nickel-chromium-iron alloy (e.g., Nicrofer^{®} 6025 HT-Alloy 602 CA). An exemplary interconnect material can include a metallic interconnect material, such as an iron-chromium alloy (e.g., Hitachi^{®} ZMG232G10^{®}, Crofer 22^{®} APU), or a high temperature stainless steel (e.g., Crofer^{®} 22H, Sanergy HT 441, E-Brite^{®}). In a particular embodiment, a coating material can be applied to the surface of the heat exchanger including a metallic interconnect material. The coating can include a glass material, an oxide, such as alumina and manganese cobalt oxide or the like, or any combination thereof. Another example of an interconnect material can include a ceramic material known in the art. In another embodiment, the heat exchanger can include an oxide, such as beryllium oxide, a carbide (e.g., SiC), a nitride, such as aluminum nitride. In yet another embodiment, the heat exchanger can include a superalloy, such as a nickel-chromium based superalloy (e.g., Inconel^{®} 600, 601, or 625), a nickel-based steel alloy (e.g., Hastalloy^{®}), a nickel-based superalloy (e.g., Waspaloy^{®}, Rene^{®} 41, or Incoloy^{®}), or any combination thereof. Emissivity can be measured in accordance with ASTM E408-13.

In an embodiment, the heat exchanger can face a gas outlet surface of the electrochemical device, such that the outlet the gas can directly impinge on at least a portion of the heat exchanger. In a further embodiment, an area of the gas outlet surface corresponding to the heat exchanger can be at least 25%, at least 40%, at least 60%, or at least 75% of a total area of the gas outlet surface. The higher the corresponding area, the higher likelihood more heat can be received by the heat exchanger. In a particular embodiment, the area of the gas outlet surface corresponding to the heat exchanger can be at least 50% of the total surface area of the gas outlet surface. In another embodiment, the corresponding area may be limited by the size or shape of the heat exchanger or the volume of the gas outlet chamber. For instance, the corresponding area may be at most 90% or at most 80% of the total area of the gas outlet surface. Moreover, the corresponding area of the gas outlet surface facing the heat exchanger can be within a range including any of the minimum and maximum percentages noted herein.

In an embodiment, the fuel gas inlet tube and the oxygen-containing gas inlet tube can include any material disclosed with respect to the heat exchanger. In another embodiment, the fuel gas outlet tube oxygen-containing gas outlet tube can include any material disclosed with respect to the heat exchanger.

### EXAMPLES

### Example 1

A representative electrochemical device S 1, as illustrated in FIGs. 2 and 3, was assembled with the heat exchanger placed in the air outlet chamber to preheat inlet air and to reduce the temperature of the air outlet surface of the SOFC stack. A conventional electrochemical device C1 without the heat exchanger was also assembled. The SOFC stacks of S 1 and C1 were all-ceramic and formed in the same manner. Each cell included a Ni-8YSZ anode, an LSM-8YSZ cathode, and an 8YSZ electrolyte disposed between the anode and cathode. An LST interconnect was disposed between adjacent cells, and a current collector was disposed at the top and bottom of the stack. The cells are co-sintered at a temperature from 1200°C to 1400°C for 6 to 12 hours in air to form the stacks.
The electrochemical devices S 1 and C 1 were tested under the conditions noted in Tables 2 to 3. Simulated reformate (33% H₂, 9% CH₄, 30% CO₂, and 28% H₂O) and air was used as the fuel gas and the oxygen-containing gas, respectively. Inlet air was preheated for both device S1 and C1. Electrical currents were applied to both SOFC stacks, as soon as they were heated to reach the operating temperature of 750°C. Several air flow rates were used to test effect of air utilization on the stack temperature profile. The temperature difference (δT) between the air-in and air-out surfaces was measured by thermocouples that was installed in the devices and is included in Tables 1 and 2.

**Table 1 Test conditions and δT of C 1**

| Current | Air utilization (%) | δT (°C) | Air flow rate (nlpm) | Stack air inlet temperature (°C) |
|---|---|---|---|---|
| 6.4A | 20 | 58 | 12.6 | 750 |
| 10A | 24 | 115 | 16.6 | 700 |

**Table 2 Test conditions and δT of S 1**

| Current | Air utilization (%) | δT (°C) | Air flow rate (nlpm) | Stack air inlet temperature (°C) | Hot box air inlet temperature (°C) |
|---|---|---|---|---|---|
| 9.6A | 16 | 6.7 | 23.9 | 775.4 | 729 |
| | 20 | 3 | 19.1 | 776.5 | 729.1 |
| | 25 | 3.3 | 15.3 | 777.7 | 729.1 |
| | 32 | 2.8 | 12.0 | 780.7 | 727.4 |
| | 36 | 3.1 | 10.6 | 781 | 727.1 |
| 12.8A | 21 | 8.8 | 24.3 | 761.1 | 581.7 |
| | 27 | 10.5 | 18.9 | 763.2 | 582 |
| | 31 | 11.5 | 16.4 | 765.7 | 582.4 |
| | 33 | 10 | 15.5 | 766.5 | 582.5 |
| 16A | 27 | 21 | 23.6 | 750.4 | 462.1 |
| | 30 | 23.9 | 21.2 | 753 | 460.1 |

Comparing to C1, S1 was able to operate with improved air utilization (lower air flowrate) and significantly lower temperature difference between the air-in and air-out surfaces. At similar electric currents and air utilizations, the heat exchanger helped to decrease the δT from 115 °C (C1 at 10A and 24% air utilization) to 3.3 °C (S1 at 9.6A and 25% air utilization), which is more than 30-fold reduction. Moreover, in the presence of the heat exchanger, the 6T of device S1 was controlled to be within the range from 3 °C to 24 °C compared to 59 °C to 115 °C of C1, indicating that the stack temperature profile of S 1 is nearly symmetrical with a minimum thermal gradient in the direction of the air flow. Note that at higher current load (12.8A and 16A) for S1, the hot box air inlet temperature was able to be lowered significantly as the air receives further heat in the heat exchanger placed in the air outlet chamber.

### Example 2

A representative electrochemical device S2 was designed as illustrated in FIGs. 2 and 3 with the radiative heat exchanger placed in the air-out chamber to preheat inlet air, and a conventional electrochemical device C2 was designed without the heat exchanger. Each of C2 and S2 included an SOFC stack of 24 cells similar to those of S1 with a dimension of 80x80x127mm. Thermofluidic-electrochemical simulation tests were conducted with different loads of current (Table 3). Air entering the heat exchanger had a temperature greater than 200 °C but less than the stack temperature, and the air temperature at the inlet of the air-in chamber was fixed at 700°C. The air flow was set at 17 nlpm at 10A current (air utilization of 23.5%), and 21.24 nlpm at 16A current (air utilization of 30%). The fuel composition was 48.5%H₂ / 48.5%N₂ / 3%H₂O with fuel utilization of 75%, and heat generation was modeled from the composition of the fuel gas. Convective cooling on the fuel side was not considered. Test results are included in Table 4. The δT of device S2 was up to 40% lower than that of the device C2. It can be expected that with a lower δT, the SOFC stack is likely to have lower local thermal stress and improved performance, such as reliability and durability.

**Table 3**

| Samples | Current | Maximum temperature | Minimum temperature | δT between the maximum and minimum temperatures | Heat recovered by heat exchanger |
|---|---|---|---|---|---|
| C2 | 10A | 835 °C | 731 C | 104 °C | n/a |
| | 16A | 967 °C | 786 | 181 °C | n/a |
| S2 | 10A | 797 °C | 733 | 64 °C | 100W |
| | 16A | 897 °C | 789 | 107 °C | 195W |

A representative electrochemical device S3 was designed as illustrated in FIGs. 2 and 3 with the heat exchanger placed in the air-out chamber to preheat inlet air. The SOFC stack was designed to have 40 cells similar to those of S1 and a dimension of 80x80x216mm.

Thermofluidic-electrochemical simulations were performed using different current loads and fuel compositions. For simulation 1 and 2, the fuel composition was 48.5%H₂/ 48.5%N₂ / 3%H₂O, and fuel utilization was 75%. For simulation 3, the fuel composition was 28%H₂ / 33%H₂O / 5%CO / 25%CO₂ / 9%CH₄ and fuel utilization was 65%. Heat generated in the stack and heat collected at the heat exchanger is incuded in Table 4.

**Table 4**

| Simulation | Current | Air utilization | Heat generated at stack (Q_{source}) (W) | Heat collected by heat exchanger (Q_{HX}) (W) | Heat recover efficiency (100% x (Q_{HX}/ Q_{source})) |
|---|---|---|---|---|---|
| 1 | 10A | 30 | 189 | 124 | 60% |
| 2 | 16A | 30 | 328 | 254 | 77% |
| 3 | 16A | 30 | 202 | 103 | 51% |

In simulation 3, part of the heat generated at the stack was absorbed by the endothermic reforming reaction (CH₄ + H₂O -> CO + 3H₂) in the stack. In all simulated tests, the heat exchanger was capable of absorbing 50-80% of the heat generated by the stack, which can be expected to reduce temperature differences in the stack and improve overall thermal efficiency of the hot box by recycling the heat inernally within the hot box.

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Reference herein to a material including one or more components may be interpreted to include at least one embodiment wherein the material consists essentially of the one or more components identified. The term "consisting essentially" will be interpreted to include a composition including those materials identified and excluding all other materials except in minority contents (e.g., impurity contents), which do not significantly alter the properties of the material. Additionally, or in the alternative, in certain non-limiting embodiments, any of the compositions identified herein may be essentially free of materials that are not expressly disclosed. The embodiments herein include range of contents for certain components within a material, and it will be appreciated that the contents of the components within a given material total 100%.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Separate embodiments may also be provided in combination in a single embodiment, and conversely, various features that are, for brevity, described in the context of a single embodiment, may also be provided separately or in any subcombination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive.

## Claims

1. An electrochemical assembly, comprising:
a housing;
an electrochemical device enclosed within the housing, wherein the electrochemical device comprises a first surface, wherein the first surface is a gas outlet surface;
a first gas outlet chamber within the housing in fluid communication with the first surface of the electrochemical device; and
a heat exchanger disposed within the first gas outlet chamber, wherein the heat exchanger is configured to transfer heat from an outlet gas to an inlet gas of the electrochemical assembly; and wherein the heat exchanger directly faces the gas outlet surface.

2. The electrochemical assembly of claim 1, wherein the gas outlet surface of the electrochemical device comprises gas outflow openings of gas channels for an outlet gas of the oxygen-containing gas to flow out of the gas outlet surface, wherein at least some of the gas outflow openings directly face the heat exchanger.

3. The electrochemical assembly of claim 1 or 2, wherein the heat exchanger is positioned such that a major surface of the heat exchanger faces the first surface.

4. The electrochemical assembly of claim 1 or 2, further comprising a first gas inlet chamber, wherein the heat exchanger is in fluid communication with the first gas inlet chamber, and wherein the first gas inlet chamber is in fluid communication with a second surface of the electrochemical device.

5. The electrochemical assembly of claim 1 or 2, wherein the first gas outlet chamber is an oxygen-containing gas outlet chamber.

6. The electrochemical assembly of claim 1 or 2, wherein the heat exchanger has a serpentine shape.

7. The electrochemical assembly of claim 1 or 2, wherein the heat exchanger comprises a material having an emissivity of at least 0.90.

8. The electrochemical assembly of claim 1 or 2, wherein the heat exchanger includes a ceramic, a metal, an oxide, a carbide, a nitride, an iron-containing alloy, a stainless steel, a superalloy, or any combination thereof.

9. The electrochemical assembly of claim 1 or 2, wherein the electrochemical device comprises a stack of solid oxide fuel cells, a battery, or a solid oxide electrolyzer cell.

10. The electrochemical assembly of claim 1 or 2, wherein the electrochemical device comprises a stack of solid oxide fuel cells, and the stack of solid oxide fuel cells has a cross-flow configuration and an interconnect layer between solid oxide fuel cells, wherein the interconnect layer comprises a ceramic material.

11. The electrochemical assembly of claim 1 or 2, further comprising a second heat exchanger disposed within the housing, wherein the second heat exchanger is disposed in a second gas outlet chamber or at least a portion of the second heat exchanger is disposed within a wall of the second gas outlet chamber.

12. The electrochemical assembly of claim 1 or 2, wherein the heat exchanger comprises a fuel reformer or a vaporizer.

13. A method of using the electrochemical assembly of claim 1 or 2, comprising:
providing an inlet gas to the heat exchanger,
wherein a temperature of the inlet gas is at least 50°C less than a temperature of the first surface of the electrochemical device.

14. The method of claim 13, wherein the heat exchanger faces the first surface and the outlet gas passing through the first surface passes across or impinges upon the heat exchanger.

15. The method of claim 13 or 14, wherein the first surface includes a first surface portion and a second surface portion, wherein the first surface portion is hotter than the second surface portion, wherein an inlet portion of the heat exchanger is aligned with the first surface portion.

## Patentansprüche

1. Elektrochemische Anordnung, umfassend:
ein Gehäuse;
eine elektrochemische Vorrichtung, die innerhalb des Gehäuses eingeschlossen ist, wobei die elektrochemische Vorrichtung eine erste Oberfläche umfasst, wobei die erste Oberfläche eine Gasaustrittsoberfläche ist;
eine erste Gasaustrittskammer innerhalb des Gehäuses in Fluidkommunikation mit der ersten Oberfläche der elektrochemischen Vorrichtung; und
einen Wärmetauscher, der innerhalb der ersten Gasaustrittskammer eingerichtet ist, wobei der Wärmetauscher konfiguriert ist, um Wärme von einem Austrittsgas zu einem Eintrittsgas der elektrochemischen Anordnung zu übertragen; und wobei der Wärmetauscher der Gasaustrittsoberfläche direkt zugewandt ist.

2. Elektrochemische Anordnung nach Anspruch 1, wobei die Gasaustrittsoberfläche der elektrochemischen Vorrichtung Gasausströmöffnungen von Gaskanälen für ein Austrittsgas des sauerstoffhaltigen Gases umfasst, um aus der Gasaustrittsoberfläche zu strömen, wobei mindestens einige der Gasausströmöffnungen dem Wärmetauscher direkt zugewandt sind.

3. Elektrochemische Anordnung nach Anspruch 1 oder 2, wobei der Wärmetauscher derart positioniert ist, dass eine Hauptoberfläche des Wärmetauschers der ersten Oberfläche zugewandt ist.

4. Elektrochemische Anordnung nach Anspruch 1 oder 2, ferner umfassend eine erste Gaseintrittskammer, wobei der Wärmetauscher in Fluidkommunikation mit der ersten Gaseintrittskammer ist und wobei die erste Gaseintrittskammer in Fluidkommunikation mit einer zweiten Oberfläche der elektrochemischen Vorrichtung ist.

5. Elektrochemische Anordnung nach Anspruch 1 oder 2, wobei die erste Gasaustrittskammer eine sauerstoffhaltige Gasaustrittskammer ist.

6. Elektrochemische Anordnung nach Anspruch 1 oder 2, wobei der Wärmetauscher eine Serpentinenform aufweist.

7. Elektrochemische Anordnung nach Anspruch 1 oder 2, wobei der Wärmetauscher ein Material, das ein Emissionsvermögen von mindestens 0,90 aufweist, umfasst.

8. Elektrochemische Anordnung nach Anspruch 1 oder 2, wobei der Wärmetauscher eine Keramik, ein Metall, ein Oxid, ein Carbid, ein Nitrid, eine eisenhaltige Legierung, einen Edelstahl, eine Superlegierung oder eine beliebige Kombination davon beinhaltet.

9. Elektrochemische Anordnung nach Anspruch 1 oder 2, wobei die elektrochemische Vorrichtung einen Stapel von Festoxidbrennstoffzellen, eine Batterie oder eine Festoxidelektrolyseurzelle umfasst.

10. Elektrochemische Anordnung nach Anspruch 1 oder 2, wobei die elektrochemische Vorrichtung einen Stapel von Festoxidbrennstoffzellen umfasst und der Stapel von Festoxidbrennstoffzellen eine Querstromkonfiguration und eine Verbindungsschicht zwischen Festoxidbrennstoffzellen aufweist, wobei die Verbindungsschicht ein keramisches Material umfasst.

11. Elektrochemische Anordnung nach Anspruch 1 oder 2, ferner umfassend einen zweiten Wärmetauscher, der innerhalb des Gehäuses eingerichtet ist, wobei der zweite Wärmetauscher in einer zweiten Gasaustrittskammer eingerichtet ist oder mindestens ein Abschnitt des zweiten Wärmetauschers innerhalb einer Wand der zweiten Gasaustrittskammer eingerichtet ist.

12. Elektrochemische Anordnung nach Anspruch 1 oder 2, wobei der Wärmetauscher einen Brennstoffreformer oder einen Verdampfer umfasst.

13. Verfahren zum Verwenden der elektrochemischen Anordnung nach Anspruch 1 oder 2, umfassend:
Bereitstellen eines Eintrittsgases an den Wärmetauscher,
wobei eine Temperatur des Eintrittsgases mindestens 50 °C geringer als eine Temperatur der ersten Oberfläche der elektrochemischen Vorrichtung ist.

14. Verfahren nach Anspruch 13, wobei der Wärmetauscher der ersten Oberfläche zugewandt ist und das Austrittsgas, das durch die erste Oberfläche läuft, über den Wärmetauscher läuft oder auf diesen aufprallt.

15. Verfahren nach Anspruch 13 oder 14, wobei die erste Oberfläche einen ersten Oberflächenabschnitt und einen zweiten Oberflächenabschnitt beinhaltet, wobei der erste Oberflächenabschnitt wärmer als der zweite Oberflächenabschnitt ist, wobei ein Eintrittsabschnitt des Wärmetauschers mit dem ersten Oberflächenabschnitt ausgerichtet ist.

## Revendications

1. Ensemble électrochimique, comprenant :
un logement ;
un dispositif électrochimique enfermé au sein du logement, le dispositif électrochimique comprenant une première surface, la première surface étant une surface de sortie de gaz ;
une première chambre de sortie de gaz au sein du logement en communication fluidique avec la première surface du dispositif électrochimique ; et
un échangeur de chaleur disposé au sein de la première chambre de sortie de gaz, l'échangeur de chaleur étant conçu pour transférer de la chaleur depuis un gaz de sortie vers un gaz d'entrée de l'ensemble électrochimique ; et dans lequel l'échangeur de chaleur fait face directement à la surface de sortie de gaz.

2. Ensemble électrochimique selon la revendication 1, dans lequel la surface de sortie de gaz du dispositif électrochimique comprend des ouvertures d'évacuation de gaz de canaux de gaz pour permettre à un gaz de sortie du gaz contenant de l'oxygène de s'évacuer de la surface de sortie de gaz, dans lequel au moins une partie des ouvertures d'évacuation de gaz font face directement à l'échangeur de chaleur.

3. Ensemble électrochimique selon la revendication 1 ou 2, dans lequel l'échangeur de chaleur est positionné de telle sorte qu'une surface principale de l'échangeur de chaleur fait face à la première surface.

4. Ensemble électrochimique selon la revendication 1 ou 2, comprenant en outre une première chambre d'entrée de gaz, l'échangeur de chaleur étant en communication fluidique avec la première chambre d'entrée de gaz, et la première chambre d'entrée de gaz étant en communication fluidique avec une seconde surface du dispositif électrochimique.

5. Ensemble électrochimique selon la revendication 1 ou 2, dans lequel la première chambre de sortie de gaz est une chambre de sortie de gaz contenant de l'oxygène.

6. Ensemble électrochimique selon la revendication 1 ou 2, dans lequel l'échangeur de chaleur a une forme de serpentin.

7. Ensemble électrochimique selon la revendication 1 ou 2, dans lequel l'échangeur de chaleur comprend un matériau ayant une émissivité d'au moins 0,90.

8. Ensemble électrochimique selon la revendication 1 ou 2, dans lequel l'échangeur de chaleur comporte une céramique, un métal, un oxyde, un carbure, un nitrure, un alliage contenant du fer, un acier inoxydable, un superalliage, ou n'importe quelle combinaison de ceux-ci.

9. Ensemble électrochimique selon la revendication 1 ou 2, dans lequel le dispositif électrochimique comprend un empilement de piles à combustible à oxyde solide, une batterie, ou une cellule d'électrolyseur à oxyde solide.

10. Ensemble électrochimique selon la revendication 1 ou 2, dans lequel le dispositif électrochimique comprend un empilement de piles à combustible à oxyde solide, et l'empilement de piles à combustible à oxyde solide a une conception à flux tangentiel et une couche d'interconnexion entre les piles à combustible à oxyde solide, la couche d'interconnexion comprenant un matériau céramique.

11. Ensemble électrochimique selon la revendication 1 ou 2, comprenant en outre un second échangeur de chaleur disposé au sein du logement, le second échangeur de chaleur étant disposé dans une seconde chambre de sortie de gaz ou au moins une partie du second échangeur de chaleur étant disposée au sein d'une paroi de la seconde chambre de sortie de gaz.

12. Ensemble électrochimique selon la revendication 1 ou 2, dans lequel l'échangeur de chaleur comprend un reformeur de combustible ou un vaporisateur.

13. Procédé d'utilisation de l'ensemble électrochimique selon la revendication 1 ou 2, comprenant :
la fourniture d'un gaz d'entrée à l'échangeur de chaleur,
dans lequel une température du gaz d'entrée est au moins 50 °C inférieure à une température de la première surface du dispositif électrochimique.

14. Procédé selon la revendication 13, dans lequel l'échangeur de chaleur fait face à la première surface et le gaz de sortie traversant la première surface passe à travers ou impacte l'échangeur de chaleur.

15. Procédé selon la revendication 13 ou 14, dans lequel la première surface comporte une première partie de surface et une seconde partie de surface, la première partie de surface étant plus chaude que la seconde partie de surface, une partie d'entrée de l'échangeur de chaleur étant alignée avec la première partie de surface.
